# EUROPEAN PATENT APPLICATION

(11) **EP 4 793 974 A1**
(43) Date of publication of application: **19.08.2026**
(21) Application number: 25157708.6
(22) Date of filing: 13.02.2025
(51) Int. Cl.: H01F 3/10, H01F 27/40, H01F 30/10, H01F 30/12, H01F 27/38

(54) **INTEGRATED MAGNETIC ASSEMBLY FOR A MULTIPHASE DC-TO-DC POWER CONVERTER**

(71) Applicant: Delta Electronics (Thailand) Public Co., Ltd., Samutprakarn 10280 (TH)
(72) Inventor: Njiende, Hugues, 33102 Paderborn (DE)
(74) Representative: Keller Schneider Patent- und Markenanwälte AG

(57) **Abstract**

An integrated magnetic assembly for a multiphase DC-to-DC power converter with N phases or 2xN phases is disclosed, with N being a natural number greater than or equal to one. The integrated magnetic assembly is configured to be electrically connectable to a switching structure and a rectification structure of the multiphase DC-to-DC power converter. The integrated magnetic assembly comprises (i) a soft-magnetic core structure, which soft-magnetic core structure comprises N soft-magnetic core substructures, and (ii) a winding structure comprising N primary transformer winding structures, N secondary transformer winding structures and N choke winding structures, wherein the winding structure comprises N winding structure triplets, with each winding structure triplet of the N winding structure triplets being formed of corresponding primary transformer winding structure, secondary transformer winding structure and choke winding structure. Each soft-magnetic core substructure of the *N* soft-magnetic core substructures comprises four, five, six or seven legs and two yoke structures. Each soft-magnetic core substructure has a corresponding winding structure triplet, with the windings of the corresponding winding structure triplet are wound around at least four legs.

## Description

### Technical field

The invention relates to an integrated magnetic assembly for a multiphase DC-to-DC power converter with *N* phases or 2x*N* phases.

### Background art

It is one of the fundamental trends of modern electronics to miniaturise electronic components while at the same time increasing their performance. Transformers play a crucial role in modern electronics for changing AC voltage levels or for providing galvanic isolation between circuits, for example. In many applications, transformers need to be able to provide high power and large currents, for example for charging batteries of battery-electric or hybrid-electric vehicles or for power servers of large data centres.

The size of transformers is typically determined by the magnetic core around which the electromagnetic coils of transformers are wound. In order to provide compact transformers with reduced core losses, the miniaturisation and design of magnetic cores of transformers has been studied in detail in the prior art.

Transformers are often used as part of DC-to-DC power converters: such DC-to-DC power converters comprise a switching structure connected on one side to a DC input and on the other side to a primary side of a transformer; on a secondary side of the transformer, the transformer is connected to a rectification structure of the DC-to-DC power converter, which rectification structure is further connected to a DC output.

As such DC-to-DC power converters typically require further electric components, for example inductors or capacitors, in the prior art integrated magnetic assemblies have been disclosed that comprise both transformers as well as further electric components, typically inductors. Such integrated magnetic assemblies as known from the prior art, however, typically have high core losses during power conversion in at least some parts of the magnetic core.

### Disclosure of the invention

It is the object of the invention to provide an integrated magnetic assembly for a multiphase DC-to-DC power converter that mitigates at least some of the disadvantages of integrated magnetic assemblies as known from the prior art.

The solution to the problem is defined by the features of claim 1. The invention relates to an integrated magnetic assembly for a multiphase DC-to-DC power converter with *N* phases or 2x*N* phases, with *N* being a natural number greater than or equal to one, the integrated magnetic assembly being configured to be electrically connectable to a switching structure and a rectification structure, in particular a synchronous rectification structure or a further switching structure, of the multiphase DC-to-DC power converter.

The integrated magnetic assembly comprises a soft-magnetic core structure, which soft-magnetic core structure comprises *N* soft-magnetic core substructures, wherein each soft-magnetic core substructure of the *N* soft-magnetic core substructures comprises four, five, six or seven legs and two yoke structures, with all of the *N* soft-magnetic core substructures having the same number of legs, wherein the four, five, six or seven legs are arranged parallel to one another between the two yoke structures and wherein the two yoke structures are arranged parallel to one another, wherein the four, five, six or seven legs are arranged such between the two yoke structures that for any pair of legs of the four, five, six or seven legs, a closed-loop magnetic path exists that passes through the respective pair of legs and through the two yoke structures. In case of four or six legs, two legs of the four or six legs of each soft-magnetic core substructure are middle legs, and in case of five or seven legs, three legs of the five or seven legs of each soft-magnetic core substructure are middle legs. Two legs of the four, five, six or seven legs of each soft-magnetic core substructure are outer legs, and in case of six or seven legs, two legs of the six or seven legs of each soft-magnetic core substructure are intermediate legs, with each intermediate leg having a neighbouring middle leg and a neighbouring outer leg. The *N* soft-magnetic core substructures are linearly stacked on top of one another along a stacking direction in such a manner that for any two neighbouring soft-magnetic core substructures, the two neighbouring soft-magnetic core substructures interface one another at (i) a yoke structure of a first of the two neighbouring soft-magnetic core substructures and (ii) a yoke structure of a second of the two neighbouring soft-magnetic core substructures.

The integrated magnetic assembly further comprises a winding structure comprising *N* primary transformer winding structures, *N* secondary transformer winding structures and *N* choke winding structures, with the *N* primary transformer winding structures being related to the *N* secondary transformer winding structures in a bijective manner and with the *N* choke winding structures being related to the *N* primary transformer winding structures respectively the *N* secondary transformer winding structures in a bijective manner, with each choke winding structure of the *N* choke winding structures being electrically connected to (i) a corresponding primary transformer winding structure of the *N* primary transformer winding structures and/or to (ii) a corresponding secondary transformer winding structure of the *N* secondary transformer winding structures, wherein the winding structure comprises *N* winding structure triplets, with each winding structure triplet of the *N* winding structure triplets being formed of corresponding primary transformer winding structure, secondary transformer winding structure and choke winding structure.

The *N* soft-magnetic core substructures are related to the *N* winding structure triplets in a bijective manner, wherein each soft-magnetic core substructure has a corresponding winding structure triplet of the *N* winding structure triplets that is wound around at least four legs of the respective soft-magnetic core substructure, and wherein for each pair formed of bijectively related soft-magnetic core substructure and winding structure triplet,
- the primary transformer winding structure and the secondary transformer winding structure of the respective winding structure triplet are wound around a first subset of the at least four legs, wherein
- the choke winding structure of the respective winding structure triplet is wound around a second subset of the at least four legs, with the first subset and the second subset being disjoint, and wherein
- the winding structure triplet is wound such around the soft-magnetic core substructure that, when operating the integrated magnetic assembly as part of the multiphase DC-to-DC power converter, for each pair of legs for which (i) a primary leg of the pair is from the first subset, (ii) a secondary leg of the pair is from the second subset, and (iii) no other leg from either the first subset or the second subset is present between the primary leg and the secondary leg, the magnetic field lines in the primary leg caused by (i) current flowing through a primary transformer winding of the primary transformer winding structure that is wound around the primary leg and/or by (ii) current flowing through a secondary transformer winding of the secondary transformer winding structure that is wound around the primary leg, are directed in a substantially opposite direction compared to a direction of the magnetic field lines in the secondary leg caused by current flowing through a choke winding of the choke winding structure that is wound around the secondary leg.

The integrated magnetic assembly may be used as part of a multiphase DC-to-DC power converter, for example as part of a DC-to-DC power converter with one phase, two phases, three phases etc. In case the DC-to-DC power converter is embodied as an LLC resonant converter, for example, the different phases may be provided by the switching structure of the multiphase DC-to-DC converter. Use of a higher number of phases in general may lead to decreased overall losses as power flow may be evenly distributed over the different phases. A larger number of phases in general may require more complicated magnetic and electric circuitry, however, in particular more complicated switching structures for providing inverting and rectification functionality. Suitable switching structures and rectification structures for multiphase DC-to-DC power converters are well known to the skilled person.

The integrated magnetic assembly is specifically designed for a multiphase LLC resonant converter. LLC resonant converters are resonant converters with a resonant tank comprising inductors and capacitors, which resonant tank is designed to resonate at a specific frequency and which resonant tank is connected to a transformer. LLC resonant converters are used for DC-to-DC power conversion. LLC resonant converters are suitable for high switching frequencies and typically have low switching losses as soft switching is possible. Accordingly, LLC resonant converters are suitable for high-power applications and may be employed as part of a charging infrastructure for charging batteries of battery-electric vehicles or hybrid-electric vehicles, for example, or for power servers of data centres. The integrated magnetic assembly according to the invention may preferentially be used in such high-power applications as part of a multiphase LLC resonant converter.

The resonant tank of an LLC resonant converter typically comprises a resonant inductor placed electrically in series with (i) a resonant capacitor and (ii) the primary windings of a transformer connected to the resonant tank, and a magnetising inductor placed electrically in parallel to the primary windings of said transformer. For an N-phase LLC resonant converter, each phase of the N-phase LLC resonant converter may comprise its own resonant capacitor, resonant inductor and magnetising inductor.

When using the integrated magnetic assembly as part of a multiphase LLC resonant converter, for example, the choke winding structure of the integrated magnetic assembly may be used to provide resonant inductances, in particular for the resonant tank of the LLC resonant converter, while the primary transformer winding structure and the secondary transformer winding structure of the integrated magnetic assembly may be used to provide the transformer. Magnetising inductances for the LLC resonant converter may be provided by suitably placed air gaps in the soft-magnetic core structure. Such air gaps may also help in delaying the onset of saturation in the soft-magnetic core structure. Suitable choices of soft-magnetic materials used for the soft-magnetic core structure, in particular relating to the relative magnetic permeability of soft-magnetic materials, may also influence magnetising inductances.

Soft-magnetic materials are materials that can be easily magnetised by an external magnetic field, the magnetisation in soft-magnetic materials producing a much stronger magnetic flux density in the soft-magnetic material than the magnetic flux density of the external magnetic field in air. Compared to hard-magnetic materials, soft-magnetic materials have small hysteresis losses. As soft-magnetic materials for the soft-magnetic core structure, for example ferrites, in particular manganese-zinc ferrites or nickel-zinc ferrites, or other materials with high magnetic permeability may be used. Cores known in the prior art as ferrites cores, amorphous cores, nanocrystalline cores or pressed-powder cores are for example suitable as well for assembling the soft-magnetic core structure.

The soft-magnetic core structure comprises *N* soft-magnetic core substructures that are linearly stacked on top of one another along a stacking direction. Each soft-magnetic core substructure of the *N* soft-magnetic core substructures, together with the corresponding winding structure triplets, is configured to interact with one or two phases of the multiphase DC-to-DC converter. Primary windings, secondary windings and choke windings of a winding structure triplet are wound around legs of the corresponding soft-magnetic core substructure. The legs of the *N* soft-magnetic core substructures may comprise air gaps.

For any pair of legs of a soft-magnetic core substructure, a closed-loop magnetic path exists that passes through the two respective legs and the two yoke structures of the respective soft-magnetic core substructure. Besides deliberately introduced air gaps, each soft-magnetic core substructure is otherwise compact, and the four, five, six or seven legs are tightly enclosed by the two yoke structures.

In an embodiment of the integrated magnetic assembly according to the invention, *N* is equal to one and the soft-magnetic core substructure corresponds to the soft-magnetic core structure, wherein the soft-magnetic core structure is assembled from a first soft-magnetic core subelement and a second soft-magnetic core subelement, (i) wherein the first soft-magnetic core subelement comprises a first yoke and four, five, six or seven leg portions, with the four, five, six or seven leg portions being arranged parallel to one another and with each of the four, five, six or seven leg portions being arranged at a right angle with respect to the first yoke, and (ii) wherein the second soft-magnetic core subelement comprises a second yoke and four, five, six or seven leg portions, with the four, five, six or seven leg portions being arranged parallel to one another and with each of the four, five, six or seven leg portions being arranged at a right angle with respect to the second yoke, and wherein the first soft-magnetic core subelement and the second soft-magnetic core subelement are arranged such that the four, five, six or seven leg portions of the first soft-magnetic core subelement abut the four, five, six or seven leg portions of the second soft-magnetic core subelement.

For each winding structure triplet, the respective primary transformer winding structure and the respective secondary transformer winding structure on one hand and the respective choke winding structure on the other hand are wound around different legs of the soft-magnetic core substructure corresponding to the winding structure triplet. More specifically, the primary transformer winding structure and the respective secondary transformer winding structure are wound on a first subset of legs, and the choke winding structure is wound on a second subset of legs, with the first subset of legs and the second subset of legs being disjoint, i.e. having no leg in common. Each primary transformer winding and its corresponding secondary transformer winding are wound on a same leg, in particular in an interleaved manner to improve transformer behaviour.

Each winding structure triplet is wound in such a manner around the corresponding soft-magnetic core substructure that favourable operating conditions are provided when using the integrated magnetic assembly as part of a multiphase DC-to-DC converter. In case the soft-magnetic core substructure comprises two return legs, for example, in each return leg, the magnetic field caused by current flowing through a choke winding is directed in a substantially opposite direction to the magnetic field caused by current flowing through a primary winding and/or a secondary winding, with the respective primary winding and/or the respective secondary winding being electrically connected to the choke winding. This way, the magnetic field in the two return legs is reduced, with the reduced magnetic fields in turn leading to reduced core losses. As the magnetic field in the two return legs - provided the soft-magnetic core substructure comprises such two return legs - is reduced, the return legs may also be removed. In fact, it is primarily the presence or absence of the two return legs that distinguishes the embodiment of the soft-magnetic core substructures with four or six legs and the embodiments of the soft-magnetic core substructures with five or seven legs.

In the integrated magnetic assembly, the windings of each winding structure triplet are wound around at least four legs of the corresponding soft-magnetic core substructure. Each soft-magnetic core substructure is preferentially embodied in a symmetrical manner: in case of four legs, a plane of symmetry may lie between the two middle legs; in case of five legs, a plane of symmetry may pass through a central middle leg of the three middle legs; in case of six legs, a plane of symmetry may lie between the two middle legs; and in case of seven legs, a plane of symmetry may pass through a central middle leg of the three middle legs. Preferentially, the primary winding structure, the secondary winding structure and the choke winding structure are each wound on symmetrical legs of the corresponding soft-magnetic core substructure: in case of six legs, for example, and if the primary winding structure and the secondary winding structure are already wound around a first leg of the two middle legs, for reasons of symmetry the primary winding structure and the secondary winding structure preferentially are also wound around a second leg of the two middle legs; similarly in case of six legs, for example, and if the choke winding structure is already wound around a first leg of the two outer legs or around a first leg of the two intermediate legs, for reasons of symmetry the choke winding structure preferentially is also wound around a second leg of the two outer legs respectively a second leg of the two intermediate legs. Advantageously, a symmetry of magnetic fields in the soft-magnetic core substructure may thus be achieved during operation of the multiphase DC-to-DC power converter.

In a further embodiment of the integrated magnetic assembly according to the invention, N is equal to one and the soft-magnetic core substructure corresponds to the soft-magnetic core structure, wherein the soft-magnetic core structure is assembled from a first soft-magnetic core subelement and a second soft-magnetic core subelement, (i) wherein the first soft-magnetic core subelement comprises a first yoke and four, five, six or seven legs, with the four, five, six or seven legs being arranged parallel to one another and with each of the four, five, six or seven legs being arranged at a right angle with respect to the first yoke, and (ii) wherein the second soft-magnetic core subelement comprises a second yoke, and wherein the first soft-magnetic core subelement and the second soft-magnetic core subelement are arranged such that the four, five, six or seven legs of the first soft-magnetic core subelement are arranged between the first yoke and the second yoke.

Such a soft-magnetic core structure of the integrated magnetic assembly may be used as part of a one-phase or a two-phase DC-to-DC power converter.

In a further embodiment of the integrated magnetic assembly according to the invention, the *N* soft-magnetic core substructures are consecutively arranged along the stacking direction, with each soft-magnetic core substructure of *N*-1 consecutive soft-magnetic core substructures being assembled in a same manner, with the *i*-th soft-magnetic core substructure, *i* being a natural number with values from 1 to *N*-1, being assembled from an *i*-th soft-magnetic core subelement and an (*i*+1)-th soft-magnetic core subelement, (i) wherein the i-th soft-magnetic core subelement comprises an *i*-th yoke and four, five, six or seven legs, with the four, five, six or seven legs being arranged parallel to one another and with each of the four, five, six or seven legs being arranged at a right angle with respect to the *i*-th yoke, and (ii) wherein the (*i*+*1)*-th soft-magnetic core subelement comprises an (*i*+*1)*-th yoke and four, five, six or seven legs, with the four, five, six or seven legs being arranged parallel to one another and with each of the four, five, six or seven legs being arranged at a right angle with respect to the (*i*+*1)*-th yoke, and wherein the *i*-th soft-magnetic core subelement and the (*i*+1*)*-th soft-magnetic core subelement are arranged such that the four, five, six or seven legs of the *i*-th soft-magnetic core subelement are arranged between the *i*-th yoke and the (*i*+1)-th yoke.

Advantageously, the soft-magnetic core structure of the integrated magnetic assembly may thus be assembled in a simple manner.

In a further embodiment of the integrated magnetic assembly according to the invention, the *N*-th soft-magnetic core substructure is assembled from the *N*-th soft-magnetic core subelement and an (*N*+1)-th soft-magnetic core subelement, wherein the four, five, six or seven legs of the *N*-th soft-magnetic core subelement are leg portions, wherein the (*N*+1)-th soft-magnetic core subelement comprises an (*N*+1)-th yoke and four, five, six or seven leg portions, with the four, five, six or seven leg portions being arranged parallel to one another and with each of the four, five, six or seven leg portions being arranged at a right angle with respect to the (*N*+1)-th yoke, and wherein the *N*-th soft-magnetic core subelement and the (*N*+1)-th soft-magnetic core subelement are arranged such that the four, five, six or seven leg portions of the *N*-th soft-magnetic core subelement abut the four, five, six or seven leg portions of the (*N*+1)-th soft-magnetic core subelement.

In a further embodiment of the integrated magnetic assembly according to the invention, the *N*-th soft-magnetic core substructure is assembled from the *N*-th soft-magnetic core subelement and an (*N*+1)-th soft-magnetic core subelement, wherein the (*N*+1)-th soft-magnetic core subelement comprises an (*N*+1)-th yoke, and wherein the *N*-th soft-magnetic core subelement and the (*N*+1)-th soft-magnetic core subelement are arranged such that the four, five, six or seven legs of the *N*-th soft-magnetic core subelement are arranged between the *N*-th yoke and the (*N*+1)-th yoke.

In a further embodiment of the integrated magnetic assembly according to the invention, each soft-magnetic core substructure of the *N* soft-magnetic core substructures comprises four or six legs, wherein for each winding structure triplet of the *N* winding structure triplets, the primary transformer winding structure of the respective winding structure triplet comprises two primary transformer windings, the secondary transformer winding structure of the respective winding structure triplet comprises two secondary transformer windings, and the choke winding structure of the respective winding structure triplet comprises two choke windings. For each winding structure triplet of the *N* winding structure triplets, the two primary transformer windings of the respective winding structure triplet are related to the two secondary transformer windings of the respective winding structure triplet in a bijective manner and the two choke windings of the respective winding structure triplet are related to the two primary transformer windings of the respective winding structure triplet respectively to the two secondary transformer windings of the respective winding structure triplet in a bijective manner. Each choke winding of the 2x*N* choke windings is either electrically connected to (i) a corresponding primary transformer winding of the 2x*N* primary transformer windings or to (ii) a corresponding secondary transformer winding of the 2x*N* secondary transformer windings, and each winding structure triplet of the N winding structure triplets comprises two winding triplets, with each winding triplet being formed of bijectively related primary winding, secondary winding and choke winding. For each soft-magnetic core substructure, in case the respective soft-magnetic core substructure comprises six legs, no winding of the two corresponding winding triplets is wound around two return legs of the six legs and the two corresponding winding triplets are wound around the six legs such that
- the primary transformer winding and the secondary transformer winding of a first winding triplet of the two winding triplets are wound around a first leg of the two middle legs of the soft-magnetic core substructure, the primary transformer winding and the secondary transformer winding of a second winding triplet of the two winding triplets are wound around a second leg of the two middle legs of the soft-magnetic core substructure, with the first leg of the two middle legs and the second leg of the two middle legs forming the first subset of legs, and the two choke windings of the two winding triplets are wound (i) around the two outer legs of the soft-magnetic core substructure, the two intermediate legs being the two return legs and the two outer legs forming the second subset of legs, or (ii) around the two intermediate legs of the soft-magnetic core substructure, the two outer legs being the two return legs and the two intermediate legs forming the second subset of legs, or such that
- the primary transformer winding and the secondary transformer winding of a first winding triplet of the two winding triplets are wound around a first leg of the two outer legs of the soft-magnetic core substructure, the primary transformer winding and the secondary transformer winding of a second winding triplet of the two winding triplets are wound around a second leg of the two outer legs of the soft-magnetic core substructure, with the first leg of the two outer legs and the second leg of the two outer legs forming the first subset of legs, and the two choke windings of the two winding triplets are wound (i) around the two middle legs of the soft-magnetic core substructure, the two intermediate legs being the return legs and the two middle legs forming the second subset of legs, or (ii) around the two intermediate legs of the soft-magnetic core substructure, the two middle legs being the return legs and the two intermediate legs forming the second subsets of legs, or such that

- the primary transformer winding and the secondary transformer winding of a first winding triplet of the two winding triplets are wound around a first leg of the two intermediate legs of the soft-magnetic core substructure, the primary transformer winding and the secondary transformer winding of a second winding triplet of the two winding triplets are wound around a second leg of the two intermediate legs of the soft-magnetic core substructure, with the first leg of the two intermediate legs and the second leg of the two intermediate legs forming the first subset of legs, and the two choke windings of the two winding triplets are wound (i) around the two middle legs of the soft-magnetic core substructure, the two outer legs being the two return legs and the two middle legs forming the second subsets of legs, or (ii) around the two outer legs of the soft-magnetic core substructure, the two middle legs being the two return legs and the two outer legs forming the second subset of legs.

For each soft-magnetic core substructure of this embodiment, in case the respective soft-magnetic core substructure comprises four legs, the two corresponding winding triplets are wound around the four legs such that
- the primary transformer winding and the secondary transformer winding of a first winding triplet of the two winding triplets are wound around a first leg of the two middle legs of the soft-magnetic core substructure, the primary transformer winding and the secondary transformer winding of a second winding triplet of the two winding triplets are wound around a second leg of the two middle legs of the soft-magnetic core substructure, with the first leg of the two middle legs and the second leg of the two middle legs forming the first subset of legs, and the two choke windings of the two winding triplets are wound around the two outer legs of the soft-magnetic core substructure, with the two outer legs forming the second subset of legs, or such that
- the primary transformer winding and the secondary transformer winding of a first winding triplet of the two winding triplets are wound around a first leg of the two outer legs of the soft-magnetic core substructure, the primary transformer winding and the secondary transformer winding of a second winding triplet of the two winding triplets are wound around a second leg of the two outer legs of the soft-magnetic core substructure, with the first leg of the two outer legs and the second leg of the two outer legs forming the first subset of legs, and the two choke windings of the two winding triplets are wound around the two middle legs of the soft-magnetic core substructure, with the two middle legs forming the second subset of legs.

In this embodiment, in case of each soft-magnetic core substructure of the N soft-magnetic core substructures comprising six legs, the integrated magnetic assembly is such that when operating the integrated magnetic assembly as part of the multiphase DC-to-DC power converter, for each bijectively related pair of soft-magnetic core substructure and winding structure triplet, (i) the magnetic field lines caused by current flowing through the primary transformer winding and/or the secondary transformer winding of the first winding triplet and passing through a first return leg of the two return legs are directed in a substantially opposite direction along the first return leg compared to a direction of the magnetic field lines in the first return leg caused by current flowing through the choke winding of the first winding triplet and (ii) the magnetic field lines caused by current flowing through the primary transformer winding and/or the secondary transformer winding of the second winding triplet and passing through a second return leg of the two return legs are directed in a substantially opposite direction along the second return leg compared to a direction of the magnetic field lines in the second return leg caused by current flowing through the choke winding of the second winding triplet.

Advantageously, the integrated magnetic assembly of this embodiment may be used for both unidirectional and bidirectional multiphase DC-to-DC power converters, with the integrated magnetic assembly providing reduced core losses. Each pair of corresponding primary transformer winding and secondary transformer winding may be seen as providing a transformer, and each choke winding may be seen as providing an inductor. Each soft-magnetic core substructure and its corresponding winding structure triplet may therefore be seen as providing two transformers and two inductors for a multiphase DC-to-DC power converter. Depending on how the windings of a winding structure triplet are wound around the corresponding soft-magnetic core substructure, in particular depending on how the two primary transformer windings, the two secondary transformer windings and the two choke windings are electrically connected among one another and depending on how the winding structure triplet is electrically connectable to the switching structure and the rectification structure of the multiphase DC-to-DC power converter, each pair formed of soft-magnetic core substructure and winding structure triplet may be seen as being electrically connectable to one phase or to two phases of the multiphase DC-to-DC power converter.

In a further embodiment of the integrated magnetic assembly according to the invention, for each soft-magnetic core substructure, (i) each primary transformer winding of the two primary transformer windings which are wound around the respective soft-magnetic core substructure comprises a respective first terminal and a respective second terminal, (ii) each secondary transformer winding of the two secondary transformer windings which are wound around the respective soft-magnetic core substructure comprises a respective first terminal and a respective second terminal, and (iii) each choke winding of the two choke windings which are wound around the respective soft-magnetic core substructure comprises a respective first terminal and a respective second terminal, and wherein
- at the respective second terminal of the choke winding of the first winding triplet, the choke winding of the first winding triplet is electrically connected in series to the respective second terminal of the primary transformer winding of the first winding triplet, and wherein at the respective first terminal of the choke winding of the first winding triplet and the respective first terminal of the primary transformer winding of the first winding triplet, the first winding triplet is electrically connectable to the switching structure of the multiphase DC-to-DC power converter,
- at the respective second terminal of the choke winding of the second winding triplet, the choke winding of the second winding triplet is electrically connected in series to the respective second terminal of the primary transformer winding of the second winding triplet, and wherein at the respective first terminal of the choke winding of the second winding triplet and the respective first terminal of the primary transformer winding of the second winding triplet, the second winding triplet is electrically connectable to the switching structure of the multiphase DC-to-DC power converter,
- at the respective first terminal and the respective second terminal of the secondary transformer winding of the first winding triplet, the first winding triplet is electrically connectable to the rectification structure of the multiphase DC-to-DC power converter, and wherein
- at the respective first terminal and the respective second terminal of the secondary transformer winding of the second winding triplet, the second winding triplet is electrically connectable to the rectification structure of the multiphase DC-to-DC power converter.

Due to the lack of symmetry in the internal winding connections in this embodiment, the integrated magnetic assembly of this embodiment is preferentially used in a unidirectional multiphase DC-to-DC power converter.

In a further embodiment of the integrated magnetic assembly according to the invention, for each soft-magnetic core substructure, (i) each primary transformer winding of the two primary transformer windings which are wound around the respective soft-magnetic core substructure comprises a respective first terminal and a respective second terminal, (ii) each secondary transformer winding of the two secondary transformer windings which are wound around the respective soft-magnetic core substructure comprises a respective first terminal and a respective second terminal, and (iii) each choke winding of the two choke windings which are wound around the respective soft-magnetic core substructure comprises a respective first terminal and a respective second terminal, and wherein
- at the respective second terminal of the choke winding of the first winding triplet, the choke winding of the first winding triplet is electrically connected in series to the respective first terminal of the primary transformer winding of the first winding triplet, and wherein at the respective second terminal of the primary transformer winding of the first winding triplet, the primary transformer winding of the first winding triplet is electrically connected in series to the respective second terminal of the primary transformer winding of the second winding triplet,
- at the respective first terminal of the secondary transformer winding of the first winding triplet, the secondary transformer winding of the first winding triplet is electrically connected in series to the respective first terminal of the secondary transformer winding of the second winding triplet, and wherein at the respective second terminal of the secondary transformer winding of the second winding triplet, the secondary transformer winding of the second winding triplet is electrically connected in series to the respective first terminal of the choke winding of the second winding triplet,
- at the respective first terminal of the choke winding of the first winding triplet and at the respective first terminal of the primary transformer winding of the second winding triplet, the first winding triplet and the second winding triplet are electrically connectable to the switching structure of the multiphase DC-to-DC power converter, and wherein
- at the respective second terminal of the secondary transformer winding of the first winding triplet and at the second terminal of the choke winding of the second winding triplet, the first winding triplet and the second winding triplet are electrically connectable to the rectification structure of the multiphase DC-to-DC power converter.

The integrated magnetic assembly of this embodiment preferentially may be used in a bidirectional multiphase DC-to-DC power converter. In case of a bidirectional multiphase DC-to-DC power converter, the rectification structure typically would be embodied as a further switching structure.

In a further embodiment of the integrated magnetic assembly according to the invention, each soft-magnetic core substructure of the N soft-magnetic core substructures comprises five or seven legs, wherein for each winding structure triplet of the N winding structure triplets,
- the primary transformer winding structure of the respective winding structure triplet comprises three primary transformer windings,
- the secondary transformer winding structure of the respective winding structure triplet comprises three secondary transformer windings,
- the choke winding structure of the respective winding structure triplet comprises two choke windings,
wherein for each winding structure triplet of the N winding structure triplets, the three primary transformer windings of the respective winding structure triplet are related to the three secondary transformer windings of the respective winding structure triplet in a bijective manner, wherein each choke winding of the 2xN choke windings is either electrically connected to (i) a primary transformer winding of the 3xN primary transformer windings or to (ii) a secondary transformer winding of the 3xN secondary transformer windings, and wherein for each soft-magnetic core substructure,
- a first primary transformer winding of the three primary transformer windings and a bijectively related first secondary transformer winding of the three secondary transformer windings are wound around a first leg of the three middle legs of the soft-magnetic core substructure,
- a second primary transformer winding of the three primary transformer windings and a bijectively related second secondary transformer winding of the three secondary transformer windings are wound around a second leg of the three middle legs of the soft-magnetic core substructure,
- a third primary transformer winding of the three primary transformer windings and a bijectively related third secondary transformer winding of the three secondary transformer windings are wound around a third leg of the three middle legs of the soft-magnetic core substructure, with the three middle legs forming the first subset of legs,
- in case the respective soft-magnetic core substructure comprises seven legs, no winding is wound around two return legs of the seven legs and
   o a first choke winding of the two choke windings is wound around a first leg of the two outer legs and a second choke winding of the two choke windings is wound around a second leg of the two outer legs, with the two outer legs forming the second subset of legs and the two intermediate legs being the two return legs, or
   o a first choke winding of the two choke windings is wound around a first leg of the two intermediate legs and a second choke winding of the two choke windings is wound around a second leg of the two intermediate legs, with the two intermediate legs forming the second subset of legs and the two outer legs being the two return legs,
   wherein each winding structure triplet comprises two connected winding triplets, with a first connected winding triplet of the two connected winding triplets comprising (i) the first choke winding, (ii) the primary transformer winding or the secondary transformer winding connected to the first choke winding and (iii) the bijectively related secondary transformer winding of the connected primary transformer winding or the bijectively related primary transformer winding of the connected secondary transformer winding, and with a second connected winding triplet of the two connected winding triplets comprising (i) the second choke winding, (ii) the primary transformer winding or the secondary transformer winding connected to the second choke winding and (iii) the bijectively related secondary transformer winding of the connected primary transformer winding or the bijectively related primary transformer winding of the connected secondary transformer winding, and wherein in case of each soft-magnetic core substructure of the N soft-magnetic core substructures comprising seven legs, the integrated magnetic assembly is such that when operating the integrated magnetic assembly as part of the multiphase DC-to-DC power converter, for each bijectively related pair of soft-magnetic core substructure and winding structure triplet, (i) the magnetic field lines caused by current flowing through the primary transformer winding and/or the secondary transformer winding of the first connected winding triplet and passing through a first return leg of the two return legs are directed in a substantially opposite direction along the first return leg compared to a direction of the magnetic field lines in the first return leg caused by current flowing through the first choke winding of the first connected winding triplet and (ii) the magnetic field lines caused by current flowing through the primary transformer winding and/or the secondary transformer winding of the second connected winding triplet and passing through a second return leg of the two return legs are directed in a substantially opposite direction along the second return leg compared to a direction of the magnetic field lines in the second return leg caused by current flowing through the second choke winding of the second connected winding triplet.

Advantageously, the integrated magnetic assembly of this embodiment may be used for both unidirectional and bidirectional multiphase DC-to-DC power converters, with the integrated magnetic assembly providing reduced core losses. Each pair of corresponding primary transformer winding and secondary transformer winding may be seen as providing a transformer, and each choke winding may be seen as providing an inductor. Each soft-magnetic core substructure and the corresponding windings wound therearound may therefore be seen as providing three transformers and two inductors for a multiphase DC-to-DC power converter. Preferentially, all three primary transformer windings are electrically connected in series to each other and all three secondary transformer windings are electrically connected in series to each other. This way, each soft-magnetic core substructure and the corresponding windings wound thereon may be electrically connectable to one phase of the multiphase DC-to-DC power converter.

In a further embodiment of the integrated magnetic assembly according to the invention, for each soft-magnetic core substructure, (i) each primary transformer winding of the three primary transformer windings which are wound around the respective soft-magnetic core substructure comprises a respective first terminal and a respective second terminal, (ii) each secondary transformer winding of the three secondary transformer windings which are wound around the respective soft-magnetic core substructure comprises a respective first terminal and a respective second terminal, and (iii) each choke winding of the two choke windings which are wound around the respective soft-magnetic core substructure comprises a respective first terminal and a respective second terminal, and wherein
- at the respective second terminal of the first choke winding, the first choke winding is electrically connected in series to the respective second terminal of the first primary transformer winding, wherein at the respective first terminal of the first primary transformer winding, the first primary transformer winding is electrically connected in series to the respective first terminal of the second primary transformer winding, wherein at the respective second terminal of the second primary transformer winding, the second primary transformer winding is electrically connected in series to the respective second terminal of the third primary transformer winding, wherein at the respective first terminal of the third primary transformer winding, the third primary transformer winding is electrically connected in series to the respective first terminal of the second choke winding, and wherein at the respective first terminal of the first choke winding and the respective second terminal of the second choke winding, the integrated magnetic assembly is electrically connectable to the switching structure of the multiphase DC-to-DC power converter,
- at the respective first terminal and the respective second terminal of the first secondary transformer winding, the first secondary transformer winding is electrically connectable to the rectification structure of the multiphase DC-to-DC power converter,
- at the respective first terminal and the respective second terminal of the second secondary transformer winding, the second secondary transformer winding is electrically connectable to the rectification structure of the multiphase DC-to-DC power converter, and
- at the respective first terminal and the respective second terminal of the third secondary transformer winding, the third secondary transformer winding is electrically connectable to the rectification structure of the multiphase DC-to-DC power converter.

Due to the lack of symmetry in the internal winding connections in this embodiment, the integrated magnetic assembly of this embodiment is preferentially used in a unidirectional multiphase DC-to-DC power converter.

In a further embodiment of the integrated magnetic assembly according to the invention, for each soft-magnetic core substructure, (i) each primary transformer winding of the three primary transformer windings which are wound around the respective soft-magnetic core substructure comprises a respective first terminal and a respective second terminal, (ii) each secondary transformer winding of the three secondary transformer windings which are wound around the respective soft-magnetic core substructure comprises a respective first terminal and a respective second terminal, and (iii) each choke winding of the two choke windings which are wound around the respective soft-magnetic core substructure comprises a respective first terminal and a respective second terminal, and wherein
- at the respective second terminal of the first choke winding, the first choke winding is electrically connected in series to the respective second terminal of the first primary transformer winding, wherein at the respective first terminal of the first primary transformer winding, the first primary transformer winding is electrically connected in series to the respective first terminal of the second primary transformer winding, wherein at the respective second terminal of the second primary transformer winding, the second primary transformer winding is electrically connected in series to the respective second terminal of the third primary transformer winding, and wherein at the respective first terminal of the first choke winding and the respective first terminal of the third primary transformer winding, the integrated magnetic assembly is electrically connectable to the switching structure of the multiphase DC-to-DC power converter, and
- at the respective first terminal of the first secondary transformer winding, the first secondary transformer winding is electrically connected in series to the respective first terminal of the second secondary transformer winding, wherein at the respective second terminal of the second secondary transformer winding, the second secondary
transformer winding is electrically connected in series to the respective second terminal of the third secondary transformer winding, wherein at the respective first terminal of the third secondary transformer winding, the third secondary transformer winding is electrically connected in series to the respective first terminal of the second choke winding, and wherein at the respective second terminal of the first secondary transformer winding and at the respective second terminal of the second choke winding, the integrated magnetic assembly is electrically connectable to the rectification structure of the multiphase DC-to-DC power converter.

The integrated magnetic assembly of this embodiment preferentially may be used in a bidirectional multiphase DC-to-DC power converter. In case of a bidirectional multiphase DC-to-DC power converter, the rectification structure typically would be embodied as a further switching structure.

In a further embodiment of the integrated magnetic assembly according to the invention, all of the 2xN primary transformer windings or 3xN primary transformer windings are wound in a substantially same manner around the soft-magnetic core structure, wherein all of the 2xN secondary transformer windings or 3xN secondary transformer windings are wound in a substantially same manner around the soft-magnetic core structure, and wherein all of the 2xN choke windings are wound in a substantially same manner around the soft-magnetic core structure.

The integrated magnetic assembly according to the invention may be used as part of a multiphase DC-to-DC power converter in which both paralleling and interleaving is employed. In high-power applications that require high power-density and low-profile packaging, one way to reduce power losses and thermal stresses is paralleling, wherein each paralleled module - in present case a module may be seen as a pair formed of a soft-magnetic core substructure and the corresponding winding thereon - may only need to process a smaller power in parallel to other modules. Paralleling may further enable the use of higher switching frequencies of switches of the switching structure and, if applicable, of the rectification structure. For paralleling, the transformers may be directly paralleled, for example. For interleaving, an equal phase shift may be introduced between the parallelised modules. To help maintain equal currents in the parallel modules, all modules may preferentially be constructed in a similar way. All windings may be made from enamelled round or flat wire or from Litz wire, for example. The windings may be formed as edgewise-wound coils.

In a further embodiment of the integrated magnetic assembly according to the invention, each pair formed of bijectively related primary transformer winding and secondary transformer winding is wound in an interleaved manner around the soft-magnetic core structure.

The term interleaved as used in this embodiment is to be distinguished from the term interleaved as used in the context of multiphase DC-to-DC power converters. In present embodiment, the term interleaved refers to actual physical interleaving of turns of bijectively related primary transformer winding and secondary transformer winding around a leg of a soft-magnetic core substructure. Using such physical interleaving of coils of primary and secondary transformer windings, transformer behaviour advantageously may be improved.

In a second aspect of the invention, the invention relates to a unidirectional multiphase interleaved DC-to-DC power converter with 2xN phases, the DC-to-DC power converter comprising (i) a switching structure which is electrically connectable to a DC input, (ii) an integrated magnetic assembly according to the invention, with the 2xN primary transformer windings and the 2xN choke windings of the integrated magnetic assembly being electrically connected to the switching structure, (iii) a rectification structure which is electrically connectable to a DC output, with the 2xN secondary transformer windings being electrically connected to the rectification structure, and (iv) a control structure, with the control structure being configured to control switching of switches of the switching structure, in particular for interleaving the 2xN phases.

In an embodiment of the unidirectional multiphase interleaved DC-to-DC power converter according to the second aspect of the invention, the rectification structure is a synchronous rectification structure, with the control structure being further configured to control switching of switches of the synchronous rectification structure.

In a third aspect of the invention, the invention relates to a unidirectional multiphase interleaved DC-to-DC power converter with N phases, in particular embodied as a unidirectional multiphase interleaved LLC resonant DC-to-DC power converter with N phases, the DC-to-DC power converter comprising (i) a switching structure which is electrically connectable to a DC input, (ii) an integrated magnetic assembly according to the invention, with the integrated magnetic assembly being electrically connected to the switching structure, (iii) a rectification structure which is electrically connectable to a DC output, with the 3xN secondary transformer windings of the integrated magnetic assembly being electrically connected to the rectification structure, and (iv) a control structure, with the control structure being configured to control switching of switches of the switching structure, in particular for interleaving the N phases.

In an embodiment of the unidirectional multiphase interleaved DC-to-DC power converter according to the third aspect of the invention, the rectification structure is a synchronous rectification structure, with the control structure being further configured to control switching of switches of the synchronous rectification structure.

In a fourth aspect of the invention, the invention relates to a bidirectional multiphase interleaved DC-to-DC power converter with N phases, in particular embodied as a bidirectional multiphase interleaved LLC resonant DC-to-DC power converter with N phases, the DC-to-DC power converter comprising (i) a switching structure which is electrically connectable to a DC input, (ii) an integrated magnetic assembly according to the invention, with the integrated magnetic assembly being electrically connected to the switching structure, (iii) a further switching structure which is electrically connectable to a DC output, with the integrated magnetic assembly being electrically connected to the further switching structure, and (iv) a control structure, with the control structure being configured to control switching of switches of the switching structure and of the further switching structure, in particular for interleaving the N phases.

Further advantageous embodiments and combinations of features of the invention result from the following exemplary embodiments and the set of patent claims as a whole.

### Brief description of the drawings

The drawings used to illustrate the exemplary embodiments show:
Fig. 1 shows a first embodiment of an integrated magnetic assembly as part of a unidirectional two-phase DC-to-DC power converter;
Fig. 2 shows a second embodiment of an integrated magnetic assembly as part of a unidirectional two-phase DC-to-DC power converter;
Fig. 3 shows a third embodiment of an integrated magnetic assembly as part of a unidirectional two-phase DC-to-DC power converter;
Fig. 4 shows a fourth embodiment of an integrated magnetic assembly as part of a bidirectional one-phase DC-to-DC power converter;
Fig. 5 shows a fifth embodiment of an integrated magnetic assembly as part of a bidirectional one-phase DC-to-DC power converter;
Fig. 6 shows a sixth embodiment of an integrated magnetic assembly as part of a bidirectional one-phase DC-to-DC power converter;
Fig. 7 shows a seventh embodiment of an integrated magnetic assembly as part of a unidirectional one-phase DC-to-DC power converter;
Fig. 8 shows an eighth embodiment of an integrated magnetic assembly as part of a unidirectional one-phase DC-to-DC power converter;
Fig. 9 shows a ninth embodiment of an integrated magnetic assembly as part of a unidirectional one-phase DC-to-DC power converter;
Fig. 10 shows a tenth embodiment of an integrated magnetic assembly as part of a bidirectional one-phase DC-to-DC power converter;
Fig. 11 shows an eleventh embodiment of an integrated magnetic assembly as part of a bidirectional one-phase DC-to-DC power converter;
Fig. 12 shows a twelfth embodiment of an integrated magnetic assembly as part of a bidirectional one-phase DC-to-DC power converter; and
Fig. 13 shows different constructions of soft-magnetic core structures.

In general, identical parts are marked with the same reference symbols in the figures.

### Detailed description of the drawings

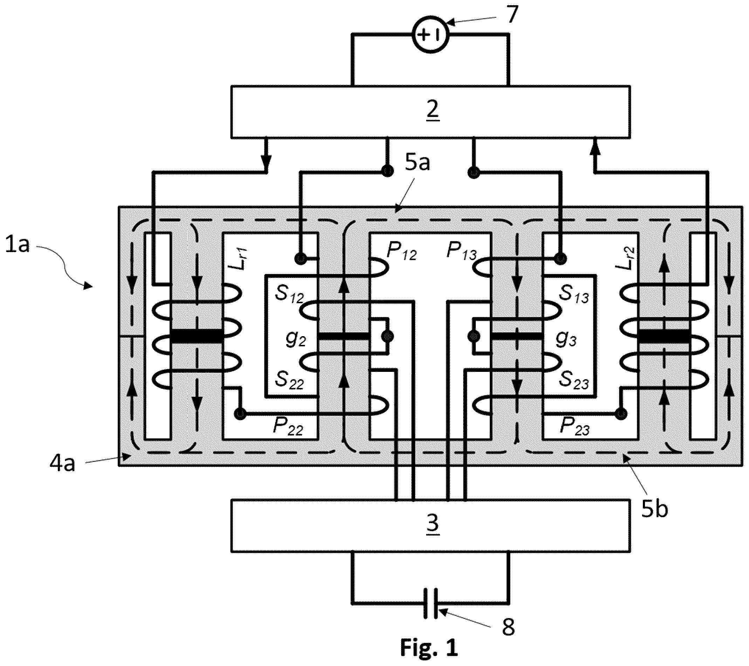

Figs. 1 to 12 have in common the following features: a DC input 7, a DC output 8, a switching structure 2 and a rectification structure 3. The switching structure 2 is electrically connected to the DC input 7 and configured to provide AC inputs to the integrated magnetic assembly 1a-I of Figs. 1 to 12. The rectification structure 3 is electrically connected to the integrated magnetic assembly 1a-I of Figs. 1 to 12 and to the DC output 8. In case of a unidirectional DC-to-DC power converter, the rectification structure 3 may be assembled from elements such as diodes without active switches; in case of a bidirectional DC-to-DC power converter, the rectification structure 3 may be assembled with active switches. The skilled person working in the field of DC-to-DC power converters in any case is aware of different switching structures 2 and rectification structures 3 that may be employed in DC-to-DC power converters.

Figs. 1 to 12 have the following features in common as well: all integrated magnetic assemblies 1a-I of Figs. 1 to 12 have a soft-magnetic core structure that comprises only one soft-magnetic core substructure 4a-I. All soft-magnetic core substructures 4a-I in Figs. 1 to 12 have two yoke structures 5a, 5b (as indicated in Fig. 1) and four, five, six or seven legs between the two yoke structures 5a, 5b. Within some of the legs, air gaps g₁, g₂, g₃ are arranged.

In Fig. 1, a first embodiment of an integrated magnetic assembly is shown as part of a unidirectional two-phase DC-to-DC power converter. The soft-magnetic core substructure comprises a first yoke structure 5a and a second yoke structure 5b. Between the two yoke structures 5a, 5b, six legs are arranged, with the two outer legs functioning as return legs, the two middle legs as legs around which primary transformer windings P₁₂, P₂₂, P₁₃ and P₂₃ and secondary transformer windings S₁₂, S₂₂, S₁₃ and S₂₃ are wound and the two intermediate legs as legs around which two choke windings Lᵣ₁ and Lᵣ₂ are wound. In Fig. 1, a first choke winding Lᵣ₁ is electrically connected in series, at a second terminal of the first choke winding, to a second terminal of first primary transformer winding P₁₂, P₂₂; at a first terminal of the first choke winding and at a first terminal of the first primary transformer winding, the first choke winding and the first primary transformer winding are electrically connected to the switching structure 2. Further as shown in Fig. 1, a first secondary transformer winding S₁₂, S₂₂ corresponding to the first primary transformer winding is wound in an interleaved manner around the same middle leg as the corresponding first primary transformer winding. The first choke winding Lᵣ₁, the first primary transformer winding P₁₂, P₂₂ and the first secondary transformer winding S₁₂, S₂₂ form a first winding triplet. A second winding triplet comprising a second primary transformer winding P₁₃, P₂₃, a second secondary transformer winding S₁₃, S₂₃ and a second choke winding Lᵣ₂ is wound in a similar manner as shown in Fig. 1. At a first terminal and a second terminal of the first secondary transformer winding S₁₂, S₂₂ and at a first terminal and a second terminal of the second secondary transformer winding S₁₃, S₂₃, the two secondary transformer windings are connected to the rectification structure 3.

As indicated in Fig. 1, the windings of both the first winding triplet and of the second winding triplet are wound such that during operation of the unidirectional two-phase DC-to-DC power converter of Fig. 1, in a first return leg on the left of Fig. 1, the magnetic field caused by current flowing through the first choke winding Lᵣ₁ is directed in an opposite direction to the magnetic field caused by current flowing through the first primary transformer winding P₁₂, P₂₂, and in a second return leg on the right of Fig. 1, the magnetic field caused by current flowing through the second choke winding Lᵣ₂ is directed in an opposite direction to the magnetic field caused by current flowing through the second primary transformer winding P₁₃, P₂₃. This way, the magnetic field in the two return legs is reduced, and thereby core losses are reduced as well.

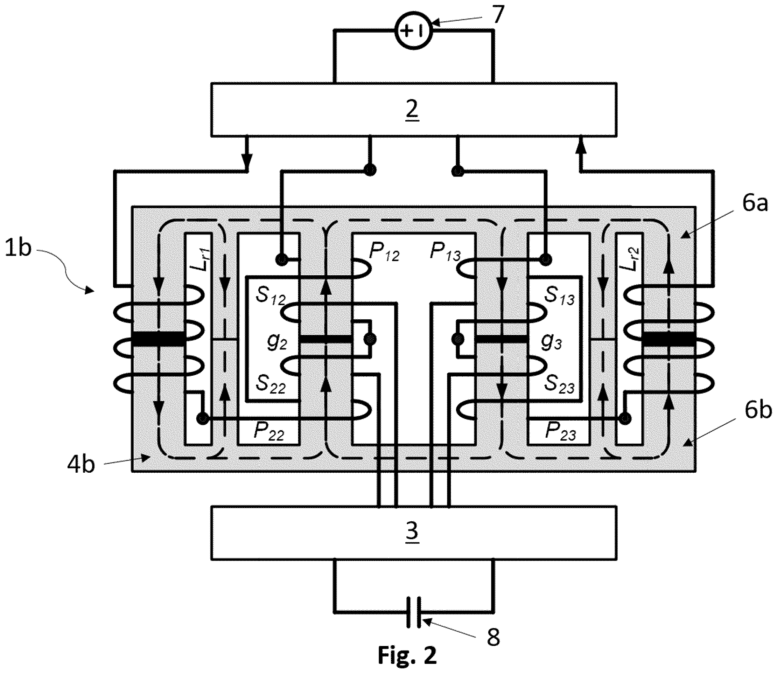

Fig. 2 is similar to Fig. 1, with the main difference being that in Fig. 2, the two intermediate legs are the return legs, while the two choke windings Lᵣ₁ and Lᵣ₂ are wound on the two outer legs.

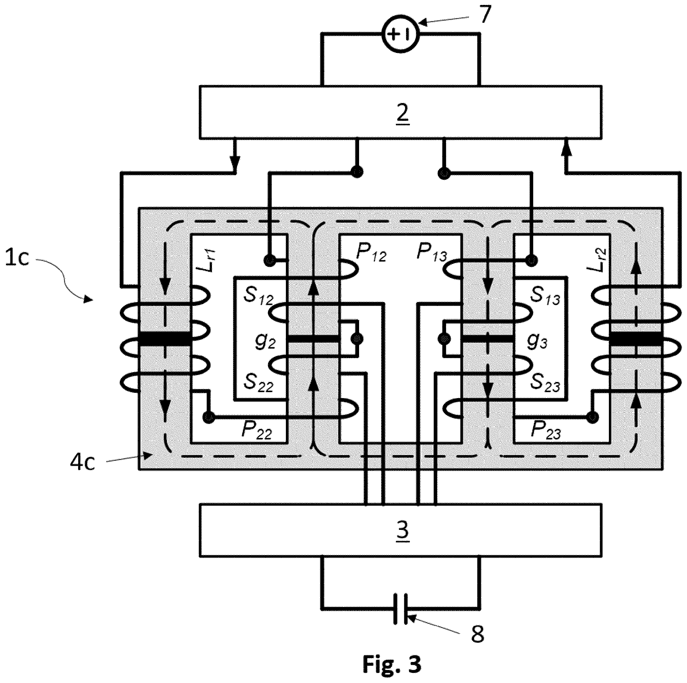

Fig. 3 is similar to Fig. 1 and Fig. 2, with the main difference being that in Fig. 3, the two return legs are removed.

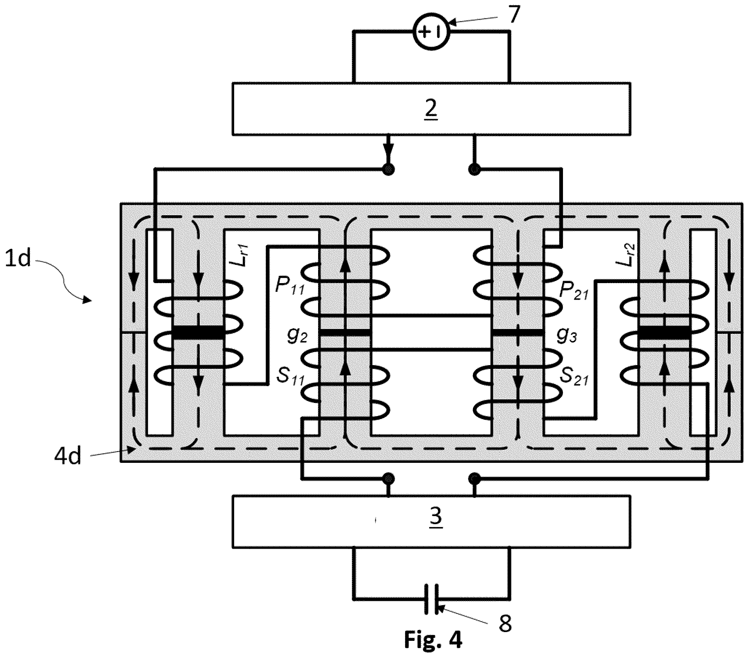

In Figs. 4 to 6, integrated magnetic assemblies 1d, 1e, 1f for bidirectional one-phase DC-to-DC converters are shown.

In Fig. 4, a first choke winding Lᵣ₁ is wound around a first intermediate leg and electrically connected in series, at a second terminal of the first choke winding, to a first terminal of a first primary transformer winding P₁₁ wound on a first middle leg, with a second terminal of the first primary transformer winding being electrically connected in series to a second terminal of a second primary transformer winding P₂₁ wound on a second middle leg. At a first terminal of the first choke winding and at a first terminal of the second primary transformer winding, the first choke winding and the second primary transformer winding are electrically connected to the switching structure 2. A first secondary transformer winding S₁₁ is wound on a same middle leg as the first primary transformer winding; at a first terminal, the first secondary transformer winding is electrically connected in series to a first terminal of the second secondary transformer winding S₂₁, which second secondary transformer winding is wound on a same middle leg as the second primary transformer winding; at a second terminal, the second secondary transformer winding is electrically connected in series to a first terminal of a second choke winding Lᵣ₂, which second choke winding is wound around a second intermediate leg. At the second terminal of the second choke winding and at a second terminal of the first secondary transformer winding, the second choke winding and the first secondary transformer winding are electrically connected to the rectification structure, preferentially embodied as a further switching structure. In Fig. 4, the two outer legs function as return legs.

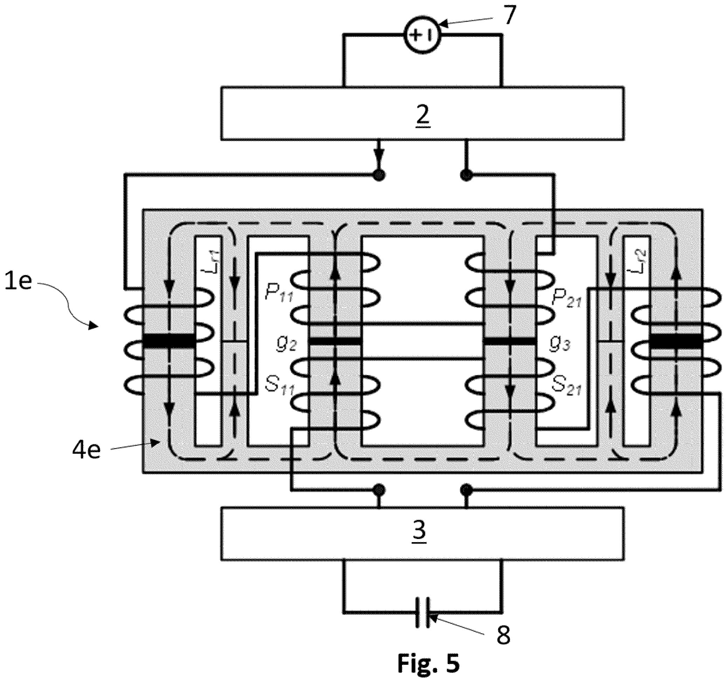

Fig. 5 is similar to Fig. 4, with the main difference being that in Fig. 5, the two intermediate legs are the return legs, while the two choke windings Lᵣ₁ and Lᵣ₂ are wound on the two outer legs.

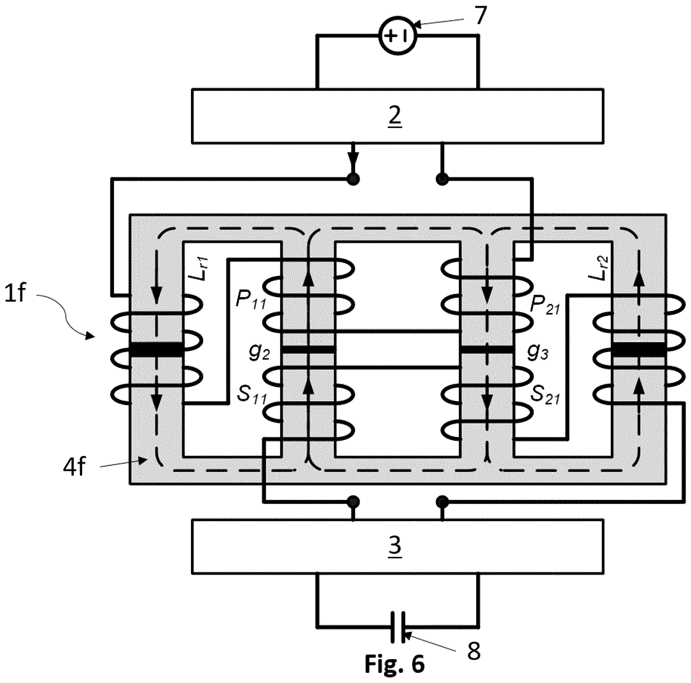

Fig. 6 is similar to Fig. 4 and Fig. 5, with the main difference being that in Fig. 6, the two return legs are removed.

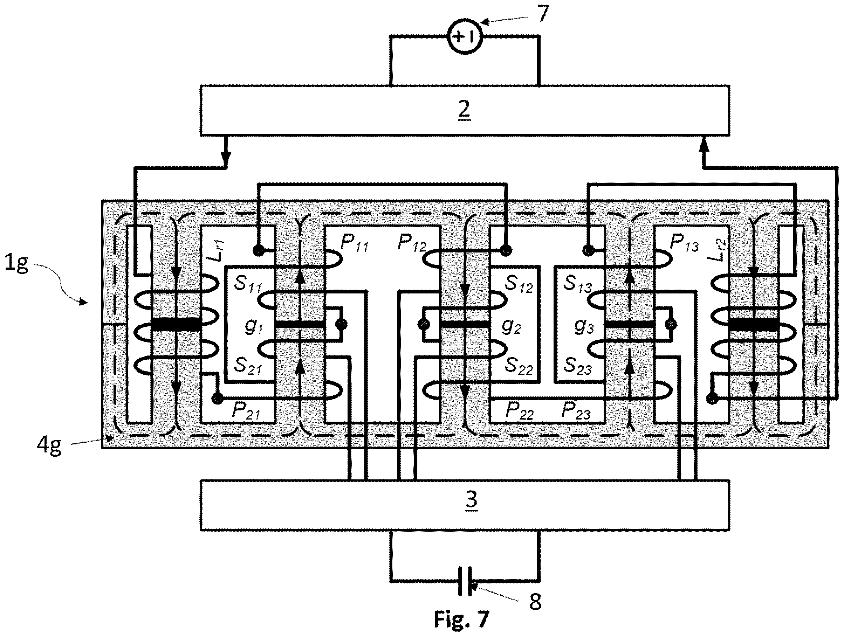

In Figs. 7 to 9, integrated magnetic assemblies 1g, 1h, 1i for unidirectional one-phase DC-to-DC converters are shown.

In Fig. 7, the soft-magnetic core 4g comprises seven legs, with the two outer legs functioning as return legs. A first choke winding Lᵣ₁ is wound around a first intermediate leg and electrically connected in series at a second terminal to a first terminal of a first primary transformer winding P₁₁, P₂₁, which first primary transformer winding is wound around a first middle leg of three middle legs. At a first terminal of the first primary transformer winding, the first primary transformer winding is electrically connected in series to a first terminal of a second primary transformer winding P₁₂, P₂₂, which second primary transformer winding is wound around a second middle leg of the three middle legs. At a second terminal of the second primary transformer winding, the second primary transformer winding is electrically connected in series to a second terminal of a third primary transformer winding P₁₃, P₂₃, which third primary transformer winding is wound around a third middle leg of the three middle legs. At a first terminal of the third primary transformer winding, the third primary transformer winding is electrically connected in series to a first terminal of a second choke winding Lᵣ₂, which second choke winding is wound around a second intermediate leg. At a first terminal of the first choke winding and at a second terminal of the second choke winding, the first choke winding and the second choke winding are electrically connected to the switching structure 2. The three secondary transformer windings, namely S₁₁, S₂₁ and S₁₂, S₂₂ and S₁₃, S₂₃ are each wound on the same middle leg as the corresponding primary transformer winding in an interleaved manner. The three secondary transformer windings are electrically connected to the rectification structure 3.

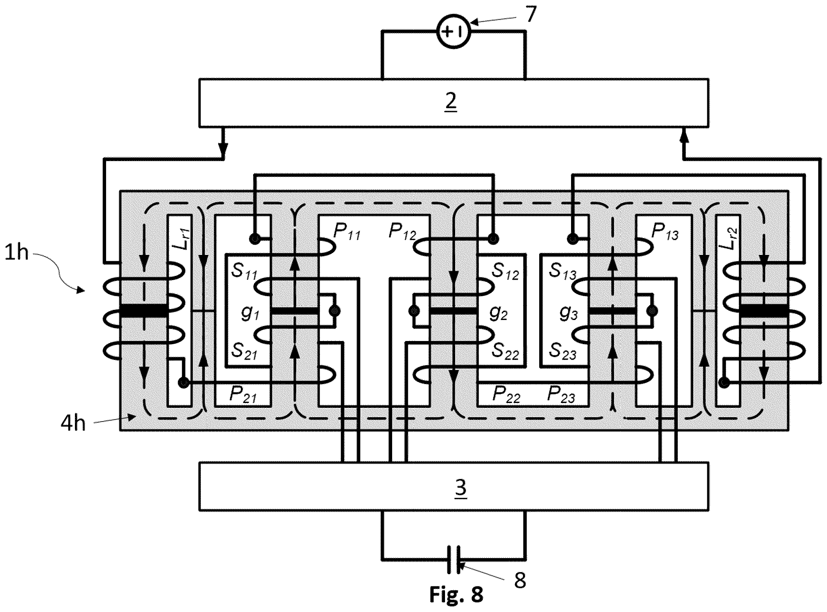

Fig. 8 is similar to Fig. 7, with the main difference being that in Fig. 8, the two intermediate legs are the return legs, while the two choke windings Lᵣ₁ and Lᵣ₂ are wound on the two outer legs.

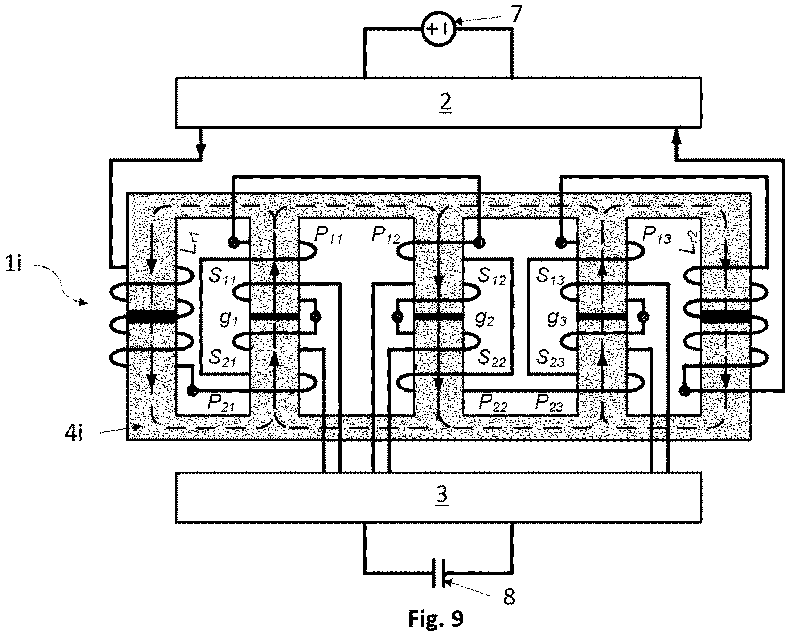

Fig. 9 is similar to Fig. 7 and Fig. 8, with the main difference being that in Fig. 9, the two return legs are removed.

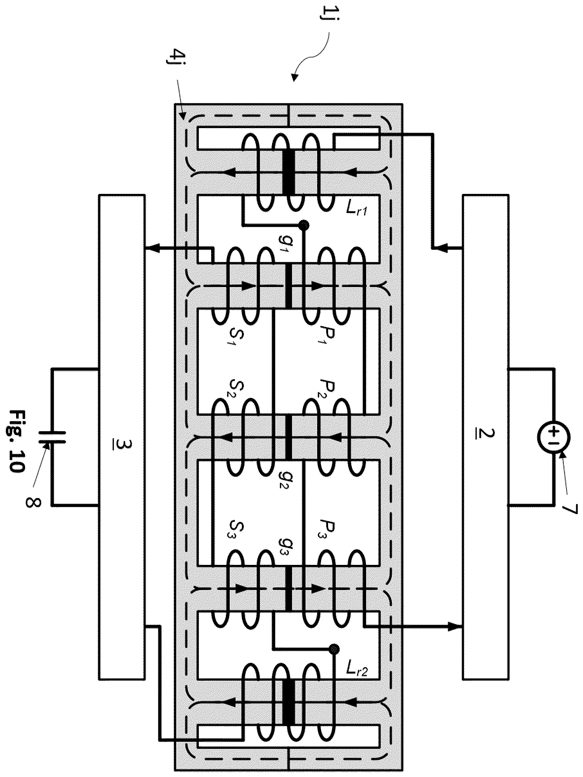

In Figs. 10 to 12, integrated magnetic assemblies 1j, 1k, 1l for bidirectional one-phase DC-to-DC converters are shown.

In Fig. 10, the soft-magnetic core 4j comprises seven legs, with the two outer legs functioning as return legs. A first choke winding Lᵣ₁ is wound around a first intermediate leg and electrically connected in series at a second terminal to a second terminal of a first primary transformer winding P₁, which first primary transformer winding is wound around a first middle leg of three middle legs. At a first terminal of the first primary transformer winding, the first primary transformer winding is electrically connected in series to a first terminal of a second primary transformer winding P₂, which second primary transformer winding is wound around a second middle leg of the three middle legs. At a second terminal of the second primary transformer winding, the second primary transformer winding is electrically connected in series to a second terminal of a third primary transformer winding P₃, which third primary transformer winding is wound around a third middle leg of the three middle legs. At a first terminal of the third primary transformer winding and at a first terminal of the first choke winding, the third primary transformer winding and the first choke winding are electrically connected in series to the switching structure 2. The three secondary transformer windings, namely S₁ and S₂ and S₃ are each wound on the same middle leg as the corresponding primary transformer winding. A first secondary transformer winding S₁ is electrically connected in series at a first terminal to a first terminal of a second secondary transformer winding S₂. At a second terminal, the second secondary transformer winding is electrically connected in series to a second terminal of a third secondary transformer winding S₃. At a first terminal, the third secondary transformer winding is electrically connected in series to a first terminal of a second choke winding Lᵣ₂ that is wound around a second intermediate leg. At the second terminal of the first secondary transformer winding and at the second terminal of the second choke winding, the first secondary transformer winding and the second choke winding are electrically connected to the rectification structure 3, preferentially embodied as a further switching structure.

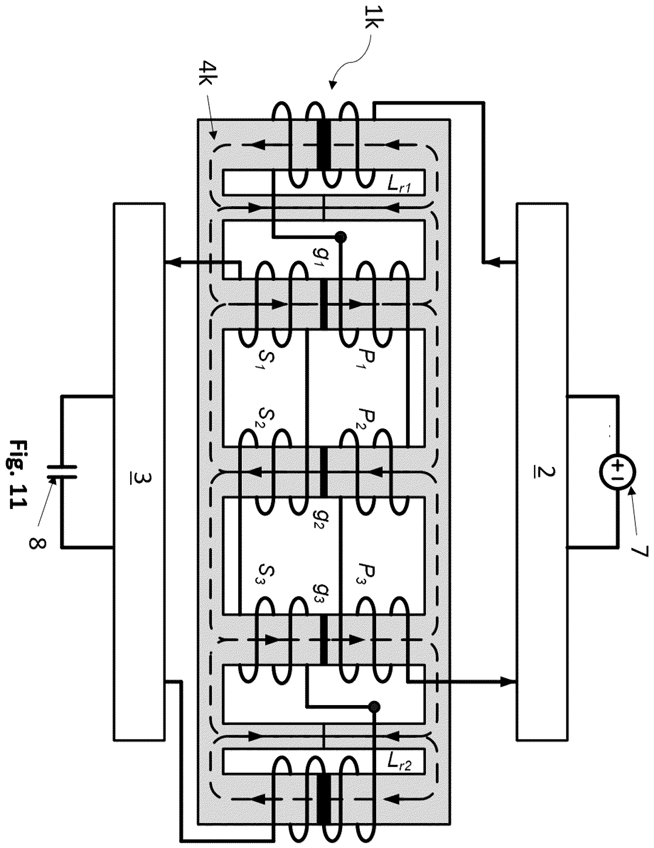

Fig. 11 is similar to Fig. 10, with the main difference being that in Fig. 11, the two intermediate legs are the return legs, while the two choke windings Lᵣ₁ and Lᵣ₂ are wound on the two outer legs.

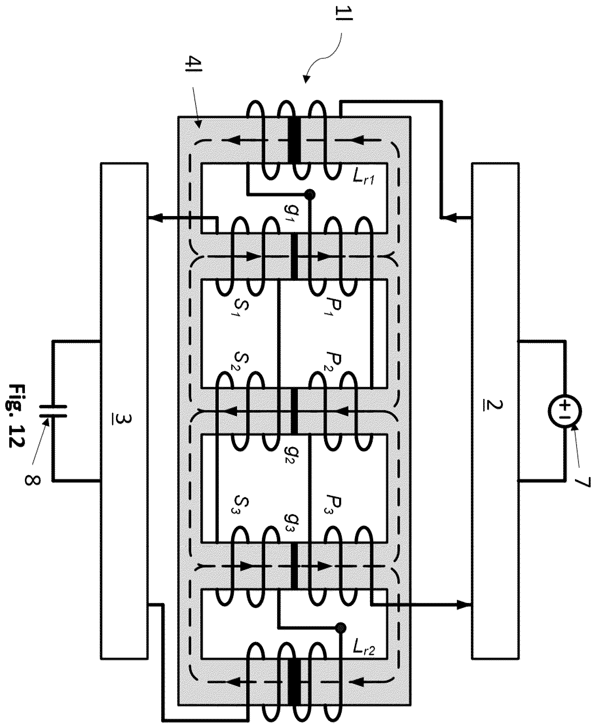

Fig. 12 is similar to Fig. 10 and Fig. 11, with the main difference being that in Fig. 12, the two return legs are removed.

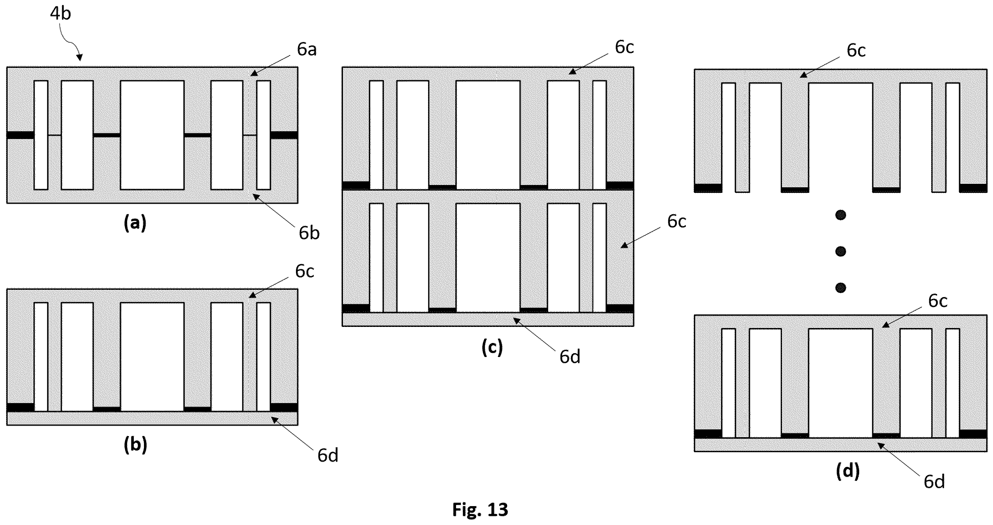

Fig. 13 shows different constructions of soft-magnetic core structures.

In Fig. 13a, a soft-magnetic core substructure 4b as in Fig. 2 is shown. The shown soft-magnetic core substructure 4b corresponds to the soft-magnetic core structure. The soft-magnetic core substructure 4b is assembled from a first soft-magnetic core subelement 6a and a second soft-magnetic core subelement 6b. Both the first soft-magnetic core subelement 6a and the second soft-magnetic core subelement 6b each comprise a yoke and six leg portions. The two soft-magnetic core subelements 6a, 6b are arranged such that the two pairs of six leg portions abut each other and thereby form six legs between the two yokes.

In Fig. 13b, a different soft-magnetic core subelement 6c is shown, with the soft-magnetic core subelement 6c providing a yoke and six legs. A further soft-magnetic core subelement 6d embodied as a yoke is arranged as shown, with the two soft-magnetic core subelements 6c, 6d providing a soft-magnetic core substructure.

In Fig. 13c, two linearly stacked soft-magnetic core substructures are shown. The two linearly stacked soft-magnetic core substructures are formed by three soft-magnetic core subelements 6c, 6d. A first soft-magnetic core substructure is formed by a yoke and the six legs of a first soft-magnetic core subelement 6c and the yoke of a second soft-magnetic core subelement 6c. A second soft-magnetic core substructure is formed by the yoke and the six legs of the second soft-magnetic core subelement 6c and a third soft-magnetic core element 6d embodied as a yoke.

In Fig. 13d, a general construction of *N* linearly stacked soft-magnetic core substructures is shown. The *N* linearly stacked soft-magnetic core substructures are formed by *N+*1 soft-magnetic core subelements 6c, 6d. In both Fig. 13c and Fig. 13d, yoke structures of neighbouring soft-magnetic core substructures may be provided by a common yoke.

## Claims

1. Integrated magnetic assembly (1a-1l) for a multiphase DC-to-DC power converter with *N* phases or 2x*N* phases, with *N* being a natural number greater than or equal to one, the integrated magnetic assembly being configured to be electrically connectable to a switching structure and a rectification structure, in particular a synchronous rectification structure or a further switching structure, of the multiphase DC-to-DC power converter, wherein the integrated magnetic assembly comprises
• a soft-magnetic core structure, which soft-magnetic core structure comprises *N* soft-magnetic core substructures, wherein each soft-magnetic core substructure of the *N* soft-magnetic core substructures comprises four, five, six or seven legs and two yoke structures, with all of the *N* soft-magnetic core substructures having the same number of legs, wherein the four, five, six or seven legs are arranged parallel to one another between the two yoke structures and wherein the two yoke structures are arranged parallel to one another, wherein the four, five, six or seven legs are arranged such between the two yoke structures that for any pair of legs of the four, five, six or seven legs, a closed-loop magnetic path exists that passes through the respective pair of legs and through the two yoke structures, wherein
o in case of four or six legs, two legs of the four or six legs of each soft-magnetic core substructure are middle legs, and wherein in case of five or seven legs, three legs of the five or seven legs of each soft-magnetic core substructure are middle legs,
o two legs of the four, five, six or seven legs of each soft-magnetic core substructure are outer legs, and
o in case of six or seven legs, two legs of the six or seven legs of each soft-magnetic core substructure are intermediate legs, with each intermediate leg having a neighbouring middle leg and a neighbouring outer leg,
wherein the *N* soft-magnetic core substructures are linearly stacked on top of one another along a stacking direction in such a manner that for any two neighbouring soft-magnetic core substructures, the two neighbouring soft-magnetic core substructures interface one another at (i) a yoke structure of a first of the two neighbouring soft-magnetic core substructures and (ii) a yoke structure of a second of the two neighbouring soft-magnetic core substructures,
• a winding structure comprising *N* primary transformer winding structures, *N* secondary transformer winding structures and *N* choke winding structures, with the *N* primary transformer winding structures being related to the *N* secondary transformer winding structures in a bijective manner and with the *N* choke winding structures being related to the *N* primary transformer winding structures respectively the *N* secondary transformer winding structures in a bijective manner, with each choke winding structure of the *N* choke winding structures being electrically connected to (i) a corresponding primary transformer winding structure of the *N* primary transformer winding structures and/or to (ii) a corresponding secondary transformer winding structure of the *N* secondary transformer winding structures, wherein the winding structure comprises *N* winding structure triplets, with each winding structure triplet of the *N* winding structure triplets being formed of corresponding primary transformer winding structure, secondary transformer winding structure and choke winding structure,
wherein the *N* soft-magnetic core substructures are related to the *N* winding structure triplets in a bijective manner, wherein each soft-magnetic core substructure has a corresponding winding structure triplet of the *N* winding structure triplets that is wound around at least four legs of the respective soft-magnetic core substructure, and wherein for each pair formed of bijectively related soft-magnetic core substructure and winding structure triplet,
• the primary transformer winding structure and the secondary transformer winding structure of the respective winding structure triplet are wound around a first subset of the at least four legs, wherein
• the choke winding structure of the respective winding structure triplet is wound around a second subset of the at least four legs, with the first subset and the second subset being disjoint, and wherein
• the winding structure triplet is wound such around the soft-magnetic core substructure that, when operating the integrated magnetic assembly as part of the multiphase DC-to-DC power converter, for each pair of legs for which (i) a primary leg of the pair is from the first subset, (ii) a secondary leg of the pair is from the second subset, and (iii) no other leg from either the first subset or the second subset is present between the primary leg and the secondary leg, the magnetic field lines in the primary leg caused by (i) current flowing through a primary transformer winding of the primary transformer winding structure that is wound around the primary leg and/or by (ii) current flowing through a secondary transformer winding of the secondary transformer winding structure that is wound around the primary leg, are directed in a substantially opposite direction compared to a direction of the magnetic field lines in the secondary leg caused by current flowing through a choke winding of the choke winding structure that is wound around the secondary leg.

2. Integrated magnetic assembly according to claim 1, with *N* being equal to one and the soft-magnetic core substructure corresponding to the soft-magnetic core structure, wherein the soft-magnetic core structure is assembled from a first soft-magnetic core subelement and a second soft-magnetic core subelement, (i) wherein the first soft-magnetic core subelement comprises a first yoke and four, five, six or seven leg portions, with the four, five, six or seven leg portions being arranged parallel to one another and with each of the four, five, six or seven leg portions being arranged at a right angle with respect to the first yoke, and (ii) wherein the second soft-magnetic core subelement comprises a second yoke and four, five, six or seven leg portions, with the four, five, six or seven leg portions being arranged parallel to one another and with each of the four, five, six or seven leg portions being arranged at a right angle with respect to the second yoke, and wherein the first soft-magnetic core subelement and the second soft-magnetic core subelement are arranged such that the four, five, six or seven leg portions of the first soft-magnetic core subelement abut the four, five, six or seven leg portions of the second soft-magnetic core subelement.

3. Integrated magnetic assembly according to claim 1, with *N* being equal to one and the soft-magnetic core substructure corresponding to the soft-magnetic core structure, wherein the soft-magnetic core structure is assembled from a first soft-magnetic core subelement and a second soft-magnetic core subelement, (i) wherein the first soft-magnetic core subelement comprises a first yoke and four, five, six or seven legs, with the four, five, six or seven legs being arranged parallel to one another and with each of the four, five, six or seven legs being arranged at a right angle with respect to the first yoke, and (ii) wherein the second soft-magnetic core subelement comprises a second yoke, and wherein the first soft-magnetic core subelement and the second soft-magnetic core subelement are arranged such that the four, five, six or seven legs of the first soft-magnetic core subelement are arranged between the first yoke and the second yoke.

4. Integrated magnetic assembly according to claim 1, wherein the *N* soft-magnetic core substructures are consecutively arranged along the stacking direction, with each soft-magnetic core substructure of *N*-1 consecutive soft-magnetic core substructures being assembled in a same manner, with the *i*-th soft-magnetic core substructure, *i* being a natural number with values from 1 to *N*-1, being assembled from an *i*-th soft-magnetic core subelement and an (*i*+1)-th soft-magnetic core subelement, (i) wherein the *i*-th soft-magnetic core subelement comprises an i-th yoke and four, five, six or seven legs, with the four, five, six or seven legs being arranged parallel to one another and with each of the four, five, six or seven legs being arranged at a right angle with respect to the *i*-th yoke, and (ii) wherein the (*i*+*1)*-th soft-magnetic core subelement comprises an (*i*+*1)*-th yoke and four, five, six or seven legs, with the four, five, six or seven legs being arranged parallel to one another and with each of the four, five, six or seven legs being arranged at a right angle with respect to the (*i+1)*-th yoke, and wherein the *i*-th soft-magnetic core subelement and the (*i*+*1)*-th soft-magnetic core subelement are arranged such that the four, five, six or seven legs of the *i*-th soft-magnetic core subelement are arranged between the *i*-th yoke and the (*i*+1)-th yoke.

5. Integrated magnetic assembly according to claim 4, wherein the *N*-th soft-magnetic core substructure is assembled from the *N*-th soft-magnetic core subelement and an (*N*+1)-th soft-magnetic core subelement, wherein the four, five, six or seven legs of the *N*-th soft-magnetic core subelement are leg portions, wherein the (*N*+1)-th soft-magnetic core subelement comprises an (*N*+1)-th yoke and four, five, six or seven leg portions, with the four, five, six or seven leg portions being arranged parallel to one another and with each of the four, five, six or seven leg portions being arranged at a right angle with respect to the (*N*+1)-th yoke, and wherein the *N*-th soft-magnetic core subelement and the *(N*+1)-th soft-magnetic core subelement are arranged such that the four, five, six or seven leg portions of the *N*-th soft-magnetic core subelement abut the four, five, six or seven leg portions of the (*N*+1)-th soft-magnetic core subelement.

6. Integrated magnetic assembly according to claim 4, wherein the *N*-th soft-magnetic core substructure is assembled from the *N*-th soft-magnetic core subelement and an (*N*+1)-th soft-magnetic core subelement, wherein the (*N*+1)-th soft-magnetic core subelement comprises an (*N*+1)-th yoke, and wherein the *N*-th soft-magnetic core subelement and the (*N*+1)-th soft-magnetic core subelement are arranged such that the four, five, six or seven legs of the *N*-th soft-magnetic core subelement are arranged between the *N*-th yoke and the (*N*+1)-th yoke.

7. Integrated magnetic assembly according to any one of the preceding claims, wherein each soft-magnetic core substructure of the *N* soft-magnetic core substructures comprises four or six legs, wherein for each winding structure triplet of the *N* winding structure triplets,
• the primary transformer winding structure of the respective winding structure triplet comprises two primary transformer windings,
• the secondary transformer winding structure of the respective winding structure triplet comprises two secondary transformer windings,
• the choke winding structure of the respective winding structure triplet comprises two choke windings,
and wherein for each winding structure triplet of the *N* winding structure triplets,
• the two primary transformer windings of the respective winding structure triplet are related to the two secondary transformer windings of the respective winding structure triplet in a bijective manner and
• the two choke windings of the respective winding structure triplet are related to the two primary transformer windings of the respective winding structure triplet respectively to the two secondary transformer windings of the respective winding structure triplet in a bijective manner,
wherein each choke winding of the 2x*N* choke windings is either electrically connected to (i) a corresponding primary transformer winding of the 2x*N* primary transformer windings or to (ii) a corresponding secondary transformer winding of the 2x*N* secondary transformer windings, and wherein each winding structure triplet of the *N* winding structure triplets comprises two winding triplets, with each winding triplet being formed of bijectively related primary winding, secondary winding and choke winding, and wherein for each soft-magnetic core substructure
• in case the respective soft-magnetic core substructure comprises six legs, no winding of the two corresponding winding triplets is wound around two return legs of the six legs and the two corresponding winding triplets are wound around the six legs such that
o the primary transformer winding and the secondary transformer winding of a first winding triplet of the two winding triplets are wound around a first leg of the two middle legs of the soft-magnetic core substructure, the primary transformer winding and the secondary transformer winding of a second winding triplet of the two winding triplets are wound around a second leg of the two middle legs of the soft-magnetic core substructure, with the first leg of the two middle legs and the second leg of the two middle legs forming the first subset of legs, and the two choke windings of the two winding triplets are wound (i) around the two outer legs of the soft-magnetic core substructure, the two intermediate legs being the two return legs and the two outer legs forming the second subset of legs, or (ii) around the two intermediate legs of the soft-magnetic core substructure, the two outer legs being the two return legs and the two intermediate legs forming the second subset of legs, or such that
o the primary transformer winding and the secondary transformer winding of a first winding triplet of the two winding triplets are wound around a first leg of the two outer legs of the soft-magnetic core substructure, the primary transformer winding and the secondary transformer winding of a second winding triplet of the two winding triplets are wound around a second leg of the two outer legs of the soft-magnetic core substructure, with the first leg of the two outer legs and the second leg of the two outer legs forming the first subset of legs, and the two choke windings of the two winding triplets are wound (i) around the two middle legs of the soft-magnetic core substructure, the two intermediate legs being the return legs and the two middle legs forming the second subset of legs, or (ii) around the two intermediate legs of the soft-magnetic core substructure, the two middle legs being the return legs and the two intermediate legs forming the second subsets of legs, or such that
o the primary transformer winding and the secondary transformer winding of a first winding triplet of the two winding triplets are wound around a first leg of the two intermediate legs of the soft-magnetic core substructure, the primary transformer winding and the secondary transformer winding of a second winding triplet of the two winding triplets are wound around a second leg of the two intermediate legs of the soft-magnetic core substructure, with the first leg of the two intermediate legs and the second leg of the two intermediate legs forming the first subset of legs, and the two choke windings of the two winding triplets are wound (i) around the two middle legs of the soft-magnetic core substructure, the two outer legs being the two return legs and the two middle legs forming the second subsets of legs, or (ii) around the two outer legs of the soft-magnetic core substructure, the two middle legs being the two return legs and the two outer legs forming the second subset of legs, and
• in case the respective soft-magnetic core substructure comprises four legs, the two corresponding winding triplets are wound around the four legs such that
o the primary transformer winding and the secondary transformer winding of a first winding triplet of the two winding triplets are wound around a first leg of the two middle legs of the soft-magnetic core substructure, the primary transformer winding and the secondary transformer winding of a second winding triplet of the two winding triplets are wound around a second leg of the two middle legs of the soft-magnetic core substructure, with the first leg of the two middle legs and the second leg of the two middle legs forming the first subset of legs, and the two choke windings of the two winding triplets are wound around the two outer legs of the soft-magnetic core substructure, with the two outer legs forming the second subset of legs, or such that
o the primary transformer winding and the secondary transformer winding of a first winding triplet of the two winding triplets are wound around a first leg of the two outer legs of the soft-magnetic core substructure, the primary transformer winding and the secondary transformer winding of a second winding triplet of the two winding triplets are wound around a second leg of the two outer legs of the soft-magnetic core substructure, with the first leg of the two outer legs and the second leg of the two outer legs forming the first subset of legs, and the two choke windings of the two winding triplets are wound around the two middle legs of the soft-magnetic core substructure, with the two middle legs forming the second subset of legs,
and wherein in case of each soft-magnetic core substructure of the N soft-magnetic core substructures comprising six legs, the integrated magnetic assembly is such that when operating the integrated magnetic assembly as part of the multiphase DC-to-DC power converter, for each bijectively related pair of soft-magnetic core substructure and winding structure triplet, (i) the magnetic field lines caused by current flowing through the primary transformer winding and/or the secondary transformer winding of the first winding triplet and passing through a first return leg of the two return legs are directed in a substantially opposite direction along the first return leg compared to a direction of the magnetic field lines in the first return leg caused by current flowing through the choke winding of the first winding triplet and (ii) the magnetic field lines caused by current flowing through the primary transformer winding and/or the secondary transformer winding of the second winding triplet and passing through a second return leg of the two return legs are directed in a substantially opposite direction along the second return leg compared to a direction of the magnetic field lines in the second return leg caused by current flowing through the choke winding of the second winding triplet.

8. Integrated magnetic assembly according to claim 7, wherein for each soft-magnetic core substructure, (i) each primary transformer winding of the two primary transformer windings which are wound around the respective soft-magnetic core substructure comprises a respective first terminal and a respective second terminal, (ii) each secondary transformer winding of the two secondary transformer windings which are wound around the respective soft-magnetic core substructure comprises a respective first terminal and a respective second terminal, and (iii) each choke winding of the two choke windings which are wound around the respective soft-magnetic core substructure comprises a respective first terminal and a respective second terminal, and wherein
• at the respective second terminal of the choke winding of the first winding triplet, the choke winding of the first winding triplet is electrically connected in series to the respective second terminal of the primary transformer winding of the first winding triplet, and wherein at the respective first terminal of the choke winding of the first winding triplet and the respective first terminal of the primary transformer winding of the first winding triplet, the first winding triplet is electrically connectable to the switching structure of the multiphase DC-to-DC power converter,
• at the respective second terminal of the choke winding of the second winding triplet, the choke winding of the second winding triplet is electrically connected in series to the respective second terminal of the primary transformer winding of the second winding triplet, and wherein at the respective first terminal of the choke winding of the second winding triplet and the respective first terminal of the primary transformer winding of the second winding triplet, the second winding triplet is electrically connectable to the switching structure of the multiphase DC-to-DC power converter,
• at the respective first terminal and the respective second terminal of the secondary transformer winding of the first winding triplet, the first winding triplet is electrically connectable to the rectification structure of the multiphase DC-to-DC power converter, and wherein
• at the respective first terminal and the respective second terminal of the secondary transformer winding of the second winding triplet, the second winding triplet is electrically connectable to the rectification structure of the multiphase DC-to-DC power converter.

9. Integrated magnetic assembly according to claim 7, wherein for each soft-magnetic core substructure, (i) each primary transformer winding of the two primary transformer windings which are wound around the respective soft-magnetic core substructure comprises a respective first terminal and a respective second terminal, (ii) each secondary transformer winding of the two secondary transformer windings which are wound around the respective soft-magnetic core substructure comprises a respective first terminal and a respective second terminal, and (iii) each choke winding of the two choke windings which are wound around the respective soft-magnetic core substructure comprises a respective first terminal and a respective second terminal, and wherein
• at the respective second terminal of the choke winding of the first winding triplet, the choke winding of the first winding triplet is electrically connected in series to the respective first terminal of the primary transformer winding of the first winding triplet, and wherein at the respective second terminal of the primary transformer winding of the first winding triplet, the primary transformer winding of the first winding triplet is electrically connected in series to the respective second terminal of the primary transformer winding of the second winding triplet,
• at the respective first terminal of the secondary transformer winding of the first winding triplet, the secondary transformer winding of the first winding triplet is electrically connected in series to the respective first terminal of the secondary transformer winding of the second winding triplet, and wherein at the respective second terminal of the secondary transformer winding of the second winding triplet, the secondary transformer winding of the second winding triplet is electrically connected in series to the respective first terminal of the choke winding of the second winding triplet,
• at the respective first terminal of the choke winding of the first winding triplet and at the respective first terminal of the primary transformer winding of the second winding triplet, the first winding triplet and the second winding triplet are electrically connectable to the switching structure of the multiphase DC-to-DC power converter, and wherein
• at the respective second terminal of the secondary transformer winding of the first winding triplet and at the second terminal of the choke winding of the second winding triplet, the first winding triplet and the second winding triplet are electrically connectable to the rectification structure of the multiphase DC-to-DC power converter.

10. Integrated magnetic assembly according to any one of the preceding claims, wherein each soft-magnetic core substructure of the N soft-magnetic core substructures comprises five or seven legs, wherein for each winding structure triplet of the N winding structure triplets,
• the primary transformer winding structure of the respective winding structure triplet comprises three primary transformer windings,
• the secondary transformer winding structure of the respective winding structure triplet comprises three secondary transformer windings,
• the choke winding structure of the respective winding structure triplet comprises two choke windings,
wherein for each winding structure triplet of the N winding structure triplets, the three primary transformer windings of the respective winding structure triplet are related to the three secondary transformer windings of the respective winding structure triplet in a bijective manner, wherein each choke winding of the 2xN choke windings is either electrically connected to (i) a primary transformer winding of the 3xN primary transformer windings or to (ii) a secondary transformer winding of the 3xN secondary transformer windings, and wherein for each soft-magnetic core substructure,
• a first primary transformer winding of the three primary transformer windings and a bijectively related first secondary transformer winding of the three secondary transformer windings are wound around a first leg of the three middle legs of the soft-magnetic core substructure,
• a second primary transformer winding of the three primary transformer windings and a bijectively related second secondary transformer winding of the three secondary transformer windings are wound around a second leg of the three middle legs of the soft-magnetic core substructure,
• a third primary transformer winding of the three primary transformer windings and a bijectively related third secondary transformer winding of the three secondary transformer windings are wound around a third leg of the three middle legs of the soft-magnetic core substructure, with the three middle legs forming the first subset of legs,
• in case the respective soft-magnetic core substructure comprises seven legs, no winding is wound around two return legs of the seven legs and
o a first choke winding of the two choke windings is wound around a first leg of the two outer legs and a second choke winding of the two choke windings is wound around a second leg of the two outer legs, with the two outer legs forming the second subset of legs and the two intermediate legs being the two return legs, or
o a first choke winding of the two choke windings is wound around a first leg of the two intermediate legs and a second choke winding of the two choke windings is wound around a second leg of the two intermediate legs, with the two intermediate legs forming the second subset of legs and the two outer legs being the two return legs,
wherein each winding structure triplet comprises two connected winding triplets, with a first connected winding triplet of the two connected winding triplets comprising (i) the first choke winding, (ii) the primary transformer winding or the secondary transformer winding connected to the first choke winding and (iii) the bijectively related secondary transformer winding of the connected primary transformer winding or the bijectively related primary transformer winding of the connected secondary transformer winding, and with a second connected winding triplet of the two connected winding triplets comprising (i) the second choke winding, (ii) the primary transformer winding or the secondary transformer winding connected to the second choke winding and (iii) the bijectively related secondary transformer winding of the connected primary transformer winding or the bijectively related primary transformer winding of the connected secondary transformer winding, and wherein in case of each soft-magnetic core substructure of the N soft-magnetic core substructures comprising seven legs, the integrated magnetic assembly is such that when operating the integrated magnetic assembly as part of the multiphase DC-to-DC power converter, for each bijectively related pair of soft-magnetic core substructure and winding structure triplet, (i) the magnetic field lines caused by current flowing through the primary transformer winding and/or the secondary transformer winding of the first connected winding triplet and passing through a first return leg of the two return legs are directed in a substantially opposite direction along the first return leg compared to a direction of the magnetic field lines in the first return leg caused by current flowing through the first choke winding of the first connected winding triplet and (ii) the magnetic field lines caused by current flowing through the primary transformer winding and/or the secondary transformer winding of the second connected winding triplet and passing through a second return leg of the two return legs are directed in a substantially opposite direction along the second return leg compared to a direction of the magnetic field lines in the second return leg caused by current flowing through the second choke winding of the second connected winding triplet.

11. Integrated magnetic assembly according to claim 10, wherein for each soft-magnetic core substructure, (i) each primary transformer winding of the three primary transformer windings which are wound around the respective soft-magnetic core substructure comprises a respective first terminal and a respective second terminal, (ii) each secondary transformer winding of the three secondary transformer windings which are wound around the respective soft-magnetic core substructure comprises a respective first terminal and a respective second terminal, and (iii) each choke winding of the two choke windings which are wound around the respective soft-magnetic core substructure comprises a respective first terminal and a respective second terminal, and wherein
• at the respective second terminal of the first choke winding, the first choke winding is electrically connected in series to the respective second terminal of the first primary transformer winding, wherein at the respective first terminal of the first primary transformer winding, the first primary transformer winding is electrically connected in series to the respective first terminal of the second primary transformer winding, wherein at the respective second terminal of the second primary transformer winding, the second primary transformer winding is electrically connected in series to the respective second terminal of the third primary transformer winding, wherein at the respective first terminal of the third primary transformer winding, the third primary transformer winding is electrically connected in series to the respective first terminal of the second choke winding, and wherein at the respective first terminal of the first choke winding and the respective second terminal of the second choke winding, the integrated magnetic assembly is electrically connectable to the switching structure of the multiphase DC-to-DC power converter,
• at the respective first terminal and the respective second terminal of the first secondary transformer winding, the first secondary transformer winding is electrically connectable to the rectification structure of the multiphase DC-to-DC power converter,
• at the respective first terminal and the respective second terminal of the second secondary transformer winding, the second secondary transformer winding is electrically connectable to the rectification structure of the multiphase DC-to-DC power converter, and
• at the respective first terminal and the respective second terminal of the third secondary transformer winding, the third secondary transformer winding is electrically connectable to the rectification structure of the multiphase DC-to-DC power converter.

12. Integrated magnetic assembly according to claim 10, wherein for each soft-magnetic core substructure, (i) each primary transformer winding of the three primary transformer windings which are wound around the respective soft-magnetic core substructure comprises a respective first terminal and a respective second terminal, (ii) each secondary transformer winding of the three secondary transformer windings which are wound around the respective soft-magnetic core substructure comprises a respective first terminal and a respective second terminal, and (iii) each choke winding of the two choke windings which are wound around the respective soft-magnetic core substructure comprises a respective first terminal and a respective second terminal, and wherein
• at the respective second terminal of the first choke winding, the first choke winding is electrically connected in series to the respective second terminal of the first primary transformer winding, wherein at the respective first terminal of the first primary transformer winding, the first primary transformer winding is electrically connected in series to the respective first terminal of the second primary transformer winding, wherein at the respective second terminal of the second primary transformer winding, the second primary transformer winding is electrically connected in series to the respective second terminal of the third primary transformer winding, and wherein at the respective first terminal of the first choke winding and the respective first terminal of the third primary transformer winding, the integrated magnetic assembly is electrically connectable to the switching structure of the multiphase DC-to-DC power converter, and
• at the respective first terminal of the first secondary transformer winding, the first secondary transformer winding is electrically connected in series to the respective first terminal of the second secondary transformer winding, wherein at the respective second terminal of the second secondary transformer winding, the second secondary transformer winding is electrically connected in series to the respective second terminal of the third secondary transformer winding, wherein at the respective first terminal of the third secondary transformer winding, the third secondary transformer winding is electrically connected in series to the respective first terminal of the second choke winding, and wherein at the respective second terminal of the first secondary transformer winding and at the respective second terminal of the second choke winding, the integrated magnetic assembly is electrically connectable to the rectification structure of the multiphase DC-to-DC power converter.

13. Integrated magnetic assembly according to any one of the preceding claims, wherein all of the 2xN primary transformer windings or 3xN primary transformer windings are wound in a substantially same manner around the soft-magnetic core structure, wherein all of the 2xN secondary transformer windings or 3xN secondary transformer windings are wound in a substantially same manner around the soft-magnetic core structure, and wherein all of the 2xN choke windings are wound in a substantially same manner around the soft-magnetic core structure.

14. Integrated magnetic assembly according to any one of the preceding claims, wherein each pair formed of bijectively related primary transformer winding and secondary transformer winding is wound in an interleaved manner around the soft-magnetic core structure.

15. Unidirectional multiphase interleaved DC-to-DC power converter with 2xN phases, the DC-to-DC power converter comprising (i) a switching structure which is electrically connectable to a DC input, (ii) an integrated magnetic assembly according to claim 8, with the 2xN primary transformer windings and the 2xN choke windings of the integrated magnetic assembly being electrically connected to the switching structure, (iii) a rectification structure which is electrically connectable to a DC output, with the 2xN secondary transformer windings being electrically connected to the rectification structure, and (iv) a control structure, with the control structure being configured to control switching of switches of the switching structure, in particular for interleaving the 2xN phases.

16. Unidirectional multiphase interleaved DC-to-DC power converter according to claim 15, wherein the rectification structure is a synchronous rectification structure, with the control structure being further configured to control switching of switches of the synchronous rectification structure.

17. Unidirectional multiphase interleaved DC-to-DC power converter with *N* phases, in particular embodied as a unidirectional multiphase interleaved LLC resonant DC-to-DC power converter with *N* phases, the DC-to-DC power converter comprising (i) a switching structure which is electrically connectable to a DC input, (ii) an integrated magnetic assembly according to claim 11, with the integrated magnetic assembly being electrically connected to the switching structure, (iii) a rectification structure which is electrically connectable to a DC output, with the 3x*N* secondary transformer windings of the integrated magnetic assembly being electrically connected to the rectification structure, and (iv) a control structure, with the control structure being configured to control switching of switches of the switching structure, in particular for interleaving the *N* phases.

18. Unidirectional multiphase interleaved DC-to-DC power converter according to claim 17, wherein the rectification structure is a synchronous rectification structure, with the control structure being further configured to control switching of switches of the synchronous rectification structure.

19. Bidirectional multiphase interleaved DC-to-DC power converter with N phases, in particular embodied as a bidirectional multiphase interleaved LLC resonant DC-to-DC power converter with *N* phases, the DC-to-DC power converter comprising (i) a switching structure which is electrically connectable to a DC input, (ii) an integrated magnetic assembly according to claim 9 or 12, with the integrated magnetic assembly being electrically connected to the switching structure, (iii) a further switching structure which is electrically connectable to a DC output, with the integrated magnetic assembly being electrically connected to the further switching structure, and (iv) a control structure, with the control structure being configured to control switching of switches of the switching structure and of the further switching structure, in particular for interleaving the *N* phases.
